# EUROPEAN PATENT APPLICATION

(11) **EP 2 216 299 A1**
(43) Date of publication of application: **11.08.2010**
(21) Application number: 09001668.4
(22) Date of filing: 06.02.2009
(51) Int. Cl.: C02F 1/44, B01D 61/02

(54) **Method and device for purification of water**

(71) Applicant: EMW Europa Mobil Vattenrening AB, 57435 Vetlanda (SE)
(72) Inventor: Nemeth, Tibor, 43544 Mölnlycke (SE)
(74) Representative: Wallengren, Yngvar

(57) **Abstract**

In the purification of water by reverse osmosis, water is driven through a membrane which is formed into an element and is placed in a pressure vessel. The supplied water is pressurised unpurified water which is supplied from outside. The pressurisation takes place manually by a device with sufficient volume flow. A certain part of the water is withdrawn from the downstream side of the element. That amount of water which is the difference between supplied and withdrawn flow under pressure is forced through the membrane. This permeate flow is charged into the pressure vessel for permeate via the pressure which prevails on the inflow side of the membrane.

The present invention also relates to a valve for use in the purification of water by reverse osmosis.

## Description

The present invention relates to a method and an apparatus for purifying water by reverse osmosis without electricity in situ and without electrically powered components. The apparatus according to the present invention is intended to be used in private households and similar consumers where the water consumption is intermittent and only amounts to minor quantities for short periods of time. The apparatus according to the present invention is particularly well suited where there is no electricity supply or where the supply has been outed.

As a result of the method of powering the system according to the invention, the need for electrically powered high pressure pumps and electronics for controlling and regulating is obviated, and thereby the need for power in situ; the purified water is produced by a self-regulating system without electronic components which is adapted in response to and controlled by the prevailing pressure in the container for permeate.

One object of the present invention is to propose a method of purifying water using reverse osmosis without employing electric current in situ. The pressurised water provides the osmotic membrane element with inflow water and with the flow which is needed for the element to produce purified water, so-called permeate. Operation/production of the permeate and reject, as well as flushing of the element are controlled and monitored by means of an automatic valve without electronics which is pressure-regulated from the closed container for permeate. A further object of the present invention is to realise a valve for use in purifying water using reverse osmosis.

According to the present invention, the inflow water is pressurised manually by means of a device which feeds in the water to a pressure tank in which the pressure is built up at the same rate as the inflow. The device is operated manually without an electric motor driven pump and the raw water does not need to be pressurised either, but the water table may lie as much as 10 metres below the device. The raw water is fed in by the device to a pressure tank container in which the pressure is built up at the same rate as the net inflow. The pressure in the pressure tank maintains the operational conditions which give a product water flow produced by the volume flow which, in reverse osmosis, is designated the permeate which is fed into a pressure tank-type container in which, according as the permeate volume increases, the pressure is increased which gives a corresponding reduction of the driving pressure and at the same rate reduces the permeate flow, which stops completely when the counter-pressure has reached the same level as the pressure of the inflow water. That volume of product which is accommodated in the pressure tank can be tapped off at a flow which greatly exceeds the permeate flow. Once the pressure container has been emptied, permeate can be tapped off at the production rate, which is determined by the size of the membrane surface employed. The take off can further be increased in response to need by filling, from the pressure tank container, a tank with a float valve which stops the flow from the pressure tank container whereafter this container is replenished, and so on.

All of the prior art and conventionally employed systems today operating according to the principle for reverse osmosis require pressurised inflow water which is always generated by means of electric motor driven pumps of different types, or already pressurised water such as mains supply water which is also pressurised by electric motor driven pumps at waterworks or pressure stations. The conventional systems deliver a product flow which varies extremely, on the one hand in response to temperature (direct proportionality) and on the other hand in response to the salinity of the supplied water (reverse proportionality), which determines the osmotic pressure which, on increase, gives lower net driving pressure (the difference between the system pressure and the osmotic pressure given by the salinity). In addition, there is a plurality of other flow-restricting factors.

All this taken together entails that one and the same configuration of a conventional purifier always gives different flows when the salinity or the temperature of the inflow water changes. The method in purifying water by means of reverse osmosis comprises the step that water is driven under pressure through an element with osmotic membrane of per se known type and, in a conventional manner, which is realised by supplying a pressurised inlet flow to the element. It is a fact that the loading of a certain membrane, i.e. the water that is fed to the membrane and penetrates through it, in other words the permeate flow, is highly dependent upon the temperature and driving pressure of the water. All factory data are given at the reference temperature of 25°C. If the temperature falls down towards 10°C, the normal permeate flow will be halved.

The permeate flow is highly dependent upon the prevailing osmotic pressure or the water temperature or other flow-restricting factors, for example polarisation concentration, "scaling", "fouling", etc.

The driving pressure, e.g. the net driving force, is the difference between the system pressure and the osmotic pressure, which is determined by and is a function of the concentration of all of the substances - both inorganic and organic - which are found in the water most proximal the membrane surface. With increased water yield, i.e. according as the water penetrates through the membrane, largely all of its contents (the rejection is normally higher than 99%) is retained on the upstream side of the membrane and with the increase of the concentration the osmotic pressure is raised, and thereby the net driving pressure is reduced and thereby also the permeate flow.

If water is added with a different concentration of substances, this change entails a changed osmotic pressure and thereby net driving pressure, which results in a different permeate flow - increased flow when the net driving force increases and vice versa.

Further, with increased concentration in the inflow water, the osmotic pressure increases and when it approaches the mains or system pressure, the net driving pressure is reduced and the permeate flow is reduced or ceases.

In the tapped-off water/the reject, there are all of the substances rejected by the membrane. The water efficiency or water yield is the quotient between permeate- and inflow. Every maker of an osmotic membrane discloses a characteristic specific loading per surface unit. Today's high flow- and low pressure membranes produce >1 litre per minute per square metre. The purification efficiency, the rejection (counted over the membrane, and the reduction (counted in relation to the inflow water), respectively, amount to higher than 90 to 95%, for the best membrane more than 99%.

A higher water yield and high rejection entail that the concentration of the rejected substances increases in the same proportion in the reject, which in turn entails that once again the polarisation concentration increases, and thereby the risk of "scaling", "fouling", and choking of the membrane, this is controlled by flushing which takes place during the time the pressure is built up in the container for permeate until the automatic valve stops the inflow - during this period of time the permeate flow is reduced at the same time as the reject flow is maintained, the element being then flushed clean - and replacement of all reject with inflow water.

The efficiency of the flushing is reinforced by manual flushing.

The present invention will be described in greater detail hereinbelow with reference to the embodiment which is shown in the accompanying drawings.

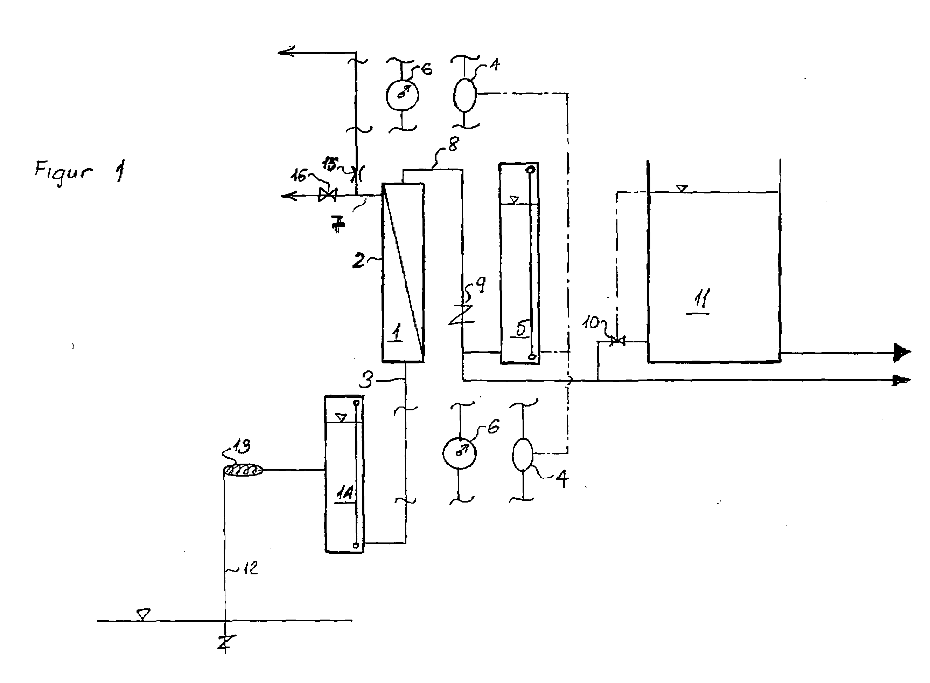

Fig.1 schematically illustrates an element 1 built up from a membrane of per se known type and all placed in a pressure vessel 2 which together constitute the element package. The water which is to be purified is supplied through a conduit 3 in which may be disposed an automatic valve 4 regulated by the pressure in the pressure container for permeate 5 or alternatively by mechanical timer 6 - after closure the element package will be unpressurised. The reject is withdrawn from the downstream side of the element through a conduit 7. The determined quantity of water which constitutes the difference between supplied and reject flow, i.e. the permeate flow is forced under that pressure prevailing on the inflow side of the membrane in other words the generated net driving force through the membrane. This permeate flow 8 is charged via a non-return valve 9 into the pressure container for permeate 5. In order further to increase the total withdrawal of produced purified water, permeate is filled from the pressure container 5 into a tank 11 regulated by a float valve 10.

The water which is to be purified 12 is exteriorly supplied raw water which is pressurised by means of a device 13 - which is driven manually without electricity and which is not an electric motor driven pump - to a pressure tank for the inflow water 14 in which the pressure increases at the same rate as the inflow. Thanks to the pressure, water 3 is supplied to the element package.

Of the inflow water, a determined volume flow passes along and about the membrane surface which constitutes reject which is led to a waste outlet through a conduit 7 and a constant flow device 15. In the conduit 7, there may be provided an automatic valve regulated by the pressure in the container for permeate 5 or alternatively by means of a mechanical timer 6 - after closure the element package remains pressurised.

The pressure tank for inflow water 14 is formed so that it holds water for flushing of the membrane by turning over three times in the pressure vessel 2 the volume of the element 1 on the upstream side of the membrane once the device 13 has stopped supplying water to the pressure tank and during the period of time when the net driving force has become zero - when the permeate flow ceases - up to when the pressure tank pressure falls to atmospheric - at which point all water flow ceases.

Manual flushing takes place with the constant flow device 15 under full flow 16.

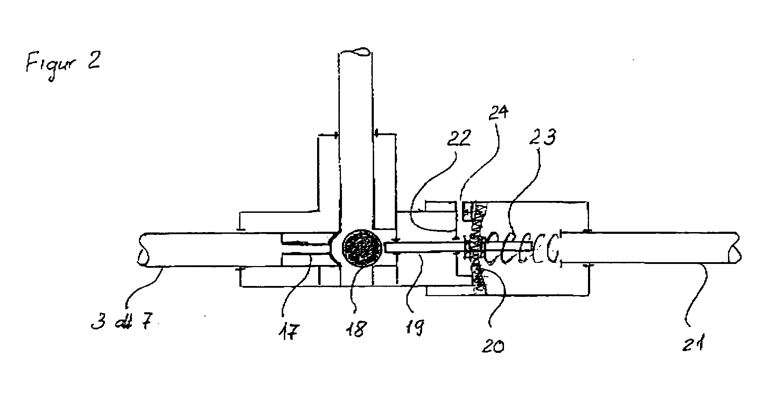

The automatic valve 4 is shown in cross section in Fig. 2. The inflow water to the valve is supplied via the nozzle 17 which also constitutes the seat of a spherical element 18 for example a glass ball which closes the flow of inflow water via a piston 19 which is fixedly connected to a bellows 20 which exercises pressure on the spherical element which is then urged against the seat on the nozzle and the flow is stopped.

The force on the piston is transferred from the bellows which is generated by the pressure from the pressure container for permeate 5 which is transferred via a conduit 21 connected to the bellows chamber 22. The force that operates the piston is determined by the area relationship between the area of the bellows and the cross-sectional area of the nozzle. Fine tuning of the operating force takes place with the aid of a spring 23 which urges against the bellows and the spring force can be adjusted in that the conduit 21 may be passed further in towards the bellows when the spring force is to be increased or be moved further out when the spring force is to be decreased. The movements of the bellows are made possible in that this moves on the piston side in a chamber at atmospheric pressure which, with a channel 24, is open to the ambient atmosphere. In other embodiments of the valve, for example the closure element may have a different configuration than spherical and adjustment of the bellows can place in different ways.

The mechanical timer 6 is set at the predetermined time which is required in order first to completely fill the container for permeate 5 and then additionally during that time which gives flushing of the membrane of the element.

For example at 5 bar pressure on the inlet and a fully charged container for permeate 10, up towards 6 litres of purified water will be able to drawn-off during a few seconds; thereafter the purifier continuously produces 1.5 litres per minute.

With a suitably selected volume of the tank, the instantaneously withdrawn volume of purified water can be adapted to meet needs.

## Claims

1. A method in purifying water by means of reverse osmosis, where water is driven through a membrane formed to an element (1) and placed in a pressure vessel (2), **characterised in that** the water that is supplied to the element is exteriorly supplied and pressurised unpurified water (3) which has been pressurised by means or device (13) - which does not require an electric motor driven pump - with sufficient volume flow, and a certain portion of the water is withdrawn from the downstream side (7) of the element, the determined quantity of water which constitutes the difference between supplied and withdrawn flow under pressure being forced through the membrane and this permeate flow (8) via the pressure prevailing on the inflow side of the membrane, in other words the generated net driving force, is charged into the pressure container for permeate (5).

2. The method as claimed in Claim 1, **characterised in that** the inlet flow (12) is supplied ahead of the element (2) by a pressure tank for inflow water (14) which contains a certain volume of inflow water under pressure, by a device (13) which is driven manually without electricity.

3. The method as claimed in Claims 1 and 2, **characterised in that** the pressure tank for inflow water (14) is designed so that it holds water for clean flushing of the membrane by turning over the volume of the element (2) in the pressure vessel (2) on the upstream side three times after the device (13) has ceased the supply of water to the pressure tank and during the period of time when the net driving force has become zero - when the permeate flow ceases - up to the time when the pressure in the pressure tank falls to atmospheric - all water flows ceasing.

4. The method as claimed in Claims 1 to 3, **characterised in that** the inflow (3) is controlled by an automatic valve (4) without electronic components, which is activated by the pressure in the pressure container for permeate (5) which arrests the inflow (3) and the element (1) in its pressure vessel (2) becomes pressureless.

5. The method as claimed in Claims 1 to 3, **characterised in that** the automatic valve (4) arrests the reject flow (7) when the pressure in the pressure container for permeate (5) activates the automatic valve and the element (1) in its pressure vessel (2) will be pressurised.

6. The method as claimed in Claims 1 to 3, **characterised in that** the inflow (4) is supplied by a mechanical timer (6) to the element during the predetermined time which is required in order first to completely fill the container for permeate (5) and then additionally during that time which gives clean flushing of the membrane of the element.

7. The method as claimed in Claims 1 to 3, **characterised in that** the mechanical timer (6) arrests the reject flow (7) after the pressure container for permeate (5) has been filled and the element (1) in its vessel (2) is under pressure.

8. The method as claimed in Claims 1 to 6, **characterised in that** the inflow water is a predetermined volume flow of the water which has passed along the membrane surface which constitutes reject (13) is led off to an outlet through a constant flow element (14) built into the automatic valve (4).

9. The method as claimed in Claims 1 to 7, **characterised in that** manual clean flushing takes place with the constant flow element (14) under full flow (15).

10. The method as claimed in Claims 1 to 9, **characterised in that** all control and regulation take place with the automatic valve (9) or alternatively a mechanical timer (10) in response to the pressure conditions in the pressure container for permeate (7) without the need of electricity or electronics.

11. The method as claimed in Claims 1 to 10, **characterised in that** produced water from the pressure tank is filled into a tank (10) controlled by a float valve (9).

12. The method as claimed in Claims 4 to 11, **characterised in that** water supplied to the element can be already pressurised water such as mains water.

13. A valve for use in purifying water by reverse osmosis, **characterised in that** it includes an element (13) for arresting the flow, a piston (19) which is fixedly connected to a bellows (20) in a bellows chamber (22) and disposed to urge against the shut-off element and displace it towards a valve seat in proportion to the pressure in a conduit (21) in communication with the bellows chamber and the bellows.
